# FASCICULE DE BREVET EUROPEEN

(11) **EP 3 701 137 B1**
(45) Date de publication et mention de la délivrance du brevet: **06.09.2023**
(21) Numéro de dépôt: 18800733.0
(22) Date de dépôt: 26.10.2018
(51) Int. Cl.: F02K 1/76

(54) **INVERSEUR DE POUSSÉE AVEC SYSTEME VERROUILLABLE ET DEVERROUILLABLE SOUS CHARGE**
SCHUBUMKEHRVORRICHTUNG MIT EINEM SYSTEM ZUM VERRIEGELN UND ENTRIEGELN UNTER LAST
THRUST REVERSER WITH A SYSTEM FOR LOCKING AND UNLOCKING UNDER LOAD

(30) Priorité: 27.10.2017 FR 1760179
(43) Date de publication de la demande: 02.09.2020
(73) Titulaire: Safran Nacelles, 76700 Gonfreville-l'Orcher (FR)
(72) Inventeur: GUILLOIS, Denis, 76700 Gonfreville L'Orcher (FR); CHAPELAIN, Loïc, 76700 Gonfreville L'Orcher (FR)
(74) Mandataire: Germain Maureau
(86) Numéro de dépôt international: PCT/FR2018/052662
(87) Numéro de publication internationale: WO 2019/081865

(56) Documents cités:
- EP-A1- 0 834 651
- WO-A1-2016/193623
- WO-A2-01/57382
- FR-A1- 2 651 527
- US-A- 5 192 023

## Description

La présente invention concerne un verrou pour un capot d'un inverseur de poussée d'une nacelle, une application de ce verrou à une nacelle à grille ou à porte, et un procédé de déverrouillage de ce verrou.

Les capots d'inverseurs de poussée du type à grilles (capots coulissants), ou à portes (capots rotatifs), comprennent des vérins d'actionnement des capots, et des verrous permettant de maintenir ces capots en position fermée sans mettre les vérins d'actionnement en charge tant que l'on ne souhaite pas utiliser la fonction d'inversion de poussée.

Classiquement, ces verrous comprennent un crochet monté rotatif sur un support lié à la nacelle, selon une configuration permettant une coopération du crochet avec une gâche solidaire du capot mobile.

Lorsque l'on souhaite ouvrir le capot mobile en vue d'utiliser la fonction d'inversion de poussée, il faut commencer par commander les vérins d'actionnement de ce capot de manière à le contraindre vers une position de sur-fermeture pour laquelle il est possible de dégager le crochet de la gâche, puis de commander les vérins d'actionnement pour amener les capots dans leur position de fonctionnement en tant qu'inverseurs de poussée.

Cette opération de commande du capot mobile en position de sur-fermeture nécessite un surdimensionnement des vérins d'actionnement, et l'aménagement de jeux permettant le déplacement du capot vers la position de sur-fermeture.

En outre, le passage de la position de fermeture à la position de sur-fermeture et le retour à la position de fermeture à partir de laquelle commence l'ouverture proprement dite, allonge le temps du cycle de déverrouillage et retarde donc la mise en service de la fonction d'inversion de poussée. Ce retard est particulièrement critique dans des situations d'aterrissage ou de décollage avortés.

D'autres verrous sont connus des documents EP 0 834 651 A1 et WO01/57382 A2.

Le but de l'invention est de proposer un verrou pour un capot d'un inverseur de poussée dont la mise en oeuvre soit plus rapide que celle des verrous existants.

En vue de la réalisation de ce but on propose l'invention selon la revendication 1.

Ainsi, le crochet est dégagé de la gâche sans qu'il soit nécessaire d'amener le capot en position de sur-fermeture. En conséquence le temps de déverrouillage du capot est ramené au temps de déplacement du crochet, c'est-à-dire un temps correspondant sensiblement à un temps de passage du capot de la position de fermeture à la position de sur-fermeture. Le verrou selon l'invention permet donc de gagner un temps sensiblement égal au temps de retour du capot de la position de sur-fermeture à la position de fermeture. En outre les vérins d'actionnement du capot ne sont plus sollicités pour le déverrouillage du verrou de sorte que la dimension des vérins d'actionnement peut être réduite.

Selon une version avantageuse de l'invention, l'organe de verrouillage/déverrouillage est monté pour pivoter sur ledit support fixé à la nacelle, le crochet et l'organe de verrouillage/déverrouillage sont configurés pour former un ensemble bielle/manivelle, et le basculement du crochet est assuré par une came fixée à l'organe de verrouillage/déverrouillage. On réalise ainsi le déplacement du crochet avec un minimum de frottements, ce qui permet d'utiliser des composants de dimensions réduites.

Selon un mode de réalisation de l'invention, l'organe de verrouillage/déverrouillage comporte une roue dentée associée à une vis sans fin entraînée par un moteur fixé au dit support fixé à la nacelle.

Selon un autre mode de réalisation de l'invention, l'organe de verrouillage/déverrouillage est relié à un vérin hydraulique.

De préférence le verrou comporte deux organes de verrouillage/déverrouillage chacun associé à un crochet, et un organe d'actionnement commun aux deux organes de verrouillage/déverrouillage. On minimise ainsi le nombre de composants nécessaires pour la réalisation de l'invention.

Selon encore un autre aspect de l'invention, celle-ci concerne un procédé de déverrouillage d'un verrou selon les étapes de la revendication 6 dans lequel, partant d'une position de verrouillage du verrou, pour laquelle au moins un crochet est engagé sur au moins une gâche et est appliqué sur celle-ci avec une force dite de verrouillage, le procédé comporte les étapes de : commander un déplacement dudit au moins un crochet selon une direction appropriée pour réduire la force appliquée sur ladite au moins une gâche, puis effectuer un basculement dudit au moins un crochet dans un sens libérant ladite au moins une gâche.

D'autres caractéristiques et avantages de l'invention apparaîtront encore à la lecture de la description qui suit de deux modes de réalisation préférés non limitatifs du verrou selon l'invention,en référence aux figures ci-jointes parmi lesquelles :
- La figure 1 est une représentation schématique du verrou selon un premier mode de réalisation de l'invention, dans la position de verrouillage,
- la figure 2 est une représentation schématique analogue à celle de la figure 1 après déplacement des crochets pour réduire la force d'appui des crochets sur les gâches,
- la figure 3 est une représentation schématique analogue à celle de la figure 1 après basculement des crochets,
- la figure 4 est une représentation schématique analogue à celle de la figure 1 en fin de cycle de déverrouillage, et
- la figure 5 est une représentation schématique analogue à celle de la figure 1 d'un second mode de réalisation de l'invention.

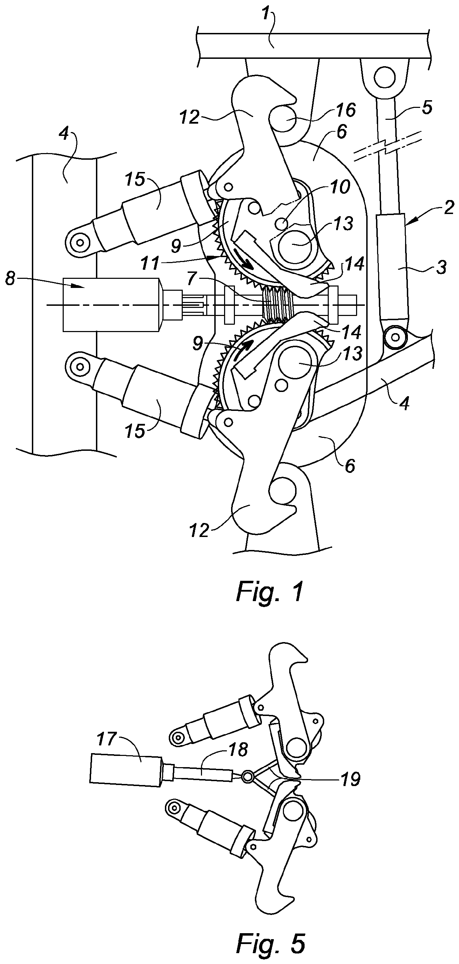

En référence aux figures 1 à 4, le verrou est destiné à assurer le verrouillage/déverrouillage d'un capot 1 d'un inverseur de poussée. De façon connue en soi, le capot 1 est associé à un vérin d'actionnement 2 dont le corps 3 est relié à la structure porteuse 4 de la nacelle, et dont la tige 5 est reliée de façon articulée au capot 1. De façon également connue en soi, une gâche 16 est fixée au capot 1. La gâche 16 est configurée pour recevoir un crochet.

Selon le mode de réalisation préféré illustré, le verrou est destiné à assurer le verrouillage/déverrouillage simultané de deux capots 1 au moyen d'un organe d'actionnement commun. A cet effet le verrou comporte un boitier 6 fixé à la structure porteuse 4 et comportant une partie centrale configurée pour recevoir une vis sans fin 7 reliée à un moteur d'entrainement 8. De façon symétrique par rapport à la vis sans fin, le boitier 6 comporte deux compartiments contenant chacun un organe de verrouillage/déverrouillage comprenant une roue 9 montée pour tourner autour d'un axe 10 porté par le boitier 6 et comportant un secteur denté 11 engagé avec la vis sans fin 7, et un crochet 12 monté pour pivoter autour d'un axe 13 porté par la roue dentée 9 correspondante et excentré par rapport à la roue dentée . Chaque crochet 12 constitue donc avec la roue correspondante un ensemble bielle/ manivelle. Une came 14 dont le positionnement et la fonction seront vus plus loin, est rigidement fixée à la roue dentée 9. Par ailleurs chaque crochet 12 est relié à une extrémité d'un organe élastique 15 dont l'autre extrémité est fixée à la structure porteuse 4 de la nacelle. L'organe élastique 15 est configuré pour exercer sur le crochet 12 une action de rappel du crochet vers la gâche correspondante.

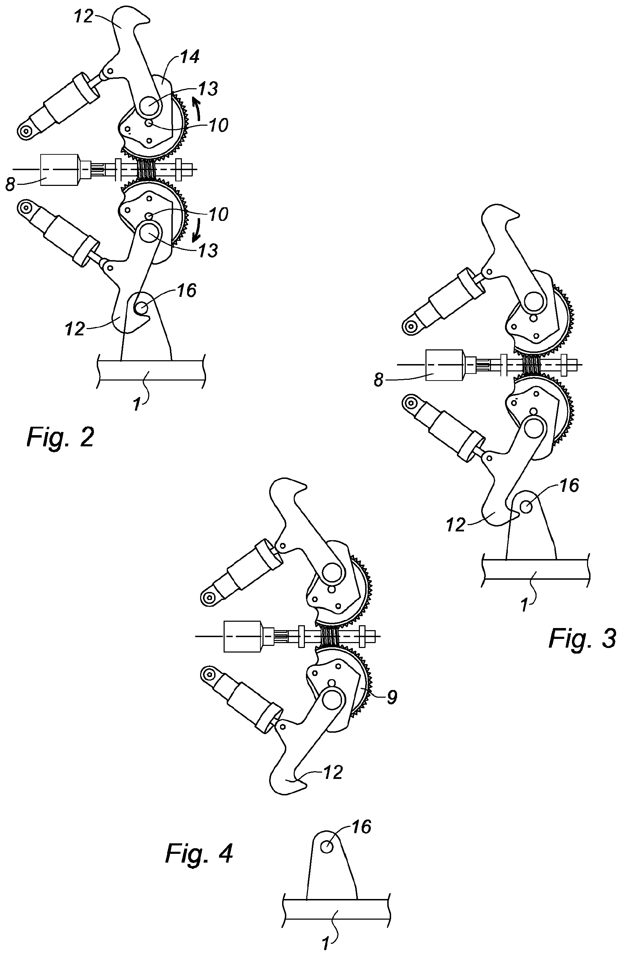

Sur la figure 1, le verrou est illustré dans la position de verrouillage des capots, c'est-à-dire que les crochets 12 sont engagés dans les gâches 16, et pour chaque ensemble, le point d'appui sur la gâche 16, l'axe de pivotement 10 de la roue 9 et l'axe de pivotement 13 du crochet 12, sont pratiquement alignés, avec l'axe 10 entre l'axe 13 et l'extrémité libre du crochet 12 : cette configuration d'alignement permet de minimiser - voire d'annuler le couple sur chaque roue dentée 9. La longueur des crochets 12 et la distance entre les axes 10 et 13 sont calculées pour que les crochets 12 soient alors fermement appliqués sur les gâches 16. A partir de cette position, une rotation des roues 9 dans un sens de désengagement des crochets comme indiqué par les flèches en trait épais sur la figure 1, provoque un déploiement de l'ensemble bielle/manivelle jusqu'à ce que le point d'appui sur la gâche 16, l'axe de pivotement 10 de la roue 9 et l'axe de pivotement 13 du crochet 12, soient de nouveau pratiquement alignés, mais cette fois avec l'axe 13 entre l'axe 10 et l'extrémité libre du crochet 12 comme illustré par la figure 2. L'appui des crochets 12 sur la gâche 16 se réduit alors à un simple contact. Par ailleurs le positionnement de la came 14 est déterminé pour que dans cette situation un bord de la came 14 tourné vers le crochet 12 soit en appui sur le côté du crochet 12 comme illustré sur la figure 2. A partir de cette position une rotation supplémentaire des roues dentées provoque un dégagement des crochets 12 comme illustré sur la figure 3. Le capot 1 est alors libre de s'ouvrir comme illustré par la figure 4. La poursuite du cycle d'ouverture s'effectue de façon connue sous le contrôle des vérins d'actionnement. A propos des figures 2 à 4, on notera que pour simplifier les différentes positions du capot 1 n'ont été illustrées que sur la partie basse des dessins. Bien entendu les explications données pour la partie basse s'appliquent également à la partie haute.

Pour le verrouillage des capots, ceux-ci sont amenés par les vérins d'actionnement 2 jusqu'à la position pour laquelle les crochets 12 sont engagés dans les gâches 16.

La poursuite du cycle de verrouillage s'effectue alors en inversant les commandes décrites pour le déverrouillage.

La figure 5 illustre un second mode de réalisation. Dans ce mode de réalisation le moteur électrique et la vis sans fin associée ont été remplacés par un vérin hydraulique 17 ayant une tige 18 reliée aux ensembles bielle/manivelle par des bras 19.

Bien entendu l'invention n'est pas limitée au mode de réalisation décrit et est susceptible de variantes de réalisation sans sortir du cadre de l'invention telle que définie par les revendications.

En particulier, bien que le dispositif selon l'invention ait été décrit en relation avec des ensembles bielle/manivelle, le déplacement des crochets 12, par opposition à la sur-fermeture des capots, peut être effectué en utilisant d'autres mécanismes, notamment des mécanismes à crémaillère.

## Revendications

1. Nacelle à grille ou à porte comportant un verrou, associé à au moins une grille ou une porte, pour un capot (1) d'un inverseur de poussée porté par la nacelle (4), le verrou comprenant : une gâche (16) fixée au capot; et un crochet (12) configuré pour s'engager dans la gâche, le verrou comportant : un support (6) fixé à la nacelle (4) et portant un organe de verrouillage/déverrouillage (7,9 ;17,19) interposé entre le crochet et ledit support fixé à la nacelle, ledit organe de verrouillage/déverrouillage étant configuré pour permettre d'une part un déplacement du crochet par rapport au dit support fixé à la nacelle entre une position dite de verrouillage pour laquelle le crochet est engagé dans la gâche et exerce un appui sur celle-ci et une position dite de déverrouillage pour laquelle le crochet est dégagé de la gâche ou simplement au contact de celle-ci, et d'autre part un basculement du crochet pour le dégager de la gâche ou l'engager dans celle-ci, **caractérisée en ce que** le crochet (12) est relié à une extrémité d'un organe élastique (15) dont l'autre extrémité est fixée à la nacelle (4) pour rappeler de façon élastique (15) le crochet (12) vers un engagement avec la gâche.

2. Nacelle à grille ou à porte selon la revendication 1 **caractérisée en ce que** l'organe de verrouillage/déverrouillage (7,9 ; 17,19) est monté pour pivoter sur ledit support (6) fixé à la nacelle, **en ce que** le crochet et l'organe de verrouillage/déverrouillage sont configurés pour former un ensemble bielle/manivelle, et **en ce que** le basculement du crochet (12) est assuré par une came (14) fixée à l'organe de verrouillage/déverrouillage.

3. Nacelle à grille ou à porte selon la revendication 2 **caractérisée en ce que** l'organe de verrouillage/déverrouillage comporte un roue dentée (11) associée à une vis sans fin (7) entraînée par un moteur (8) fixé au dit support fixé à la nacelle.

4. Nacelle à grille ou à porte selon la revendication 2, **caractérisée en ce que** l'organe de verrouillage/déverrouillage est relié à un vérin hydraulique (17).

5. Nacelle à grille ou à porte selon l'une quelconque des revendications précédentes, **caractérisée en ce que** le verrou comporte deux organes de verrouillage/déverrouillage (7,9 ;17,19) chacun associé à un crochet, et un organe d'actionnement (8 ;17) commun aux deux organes de verrouillage/déverrouillage.

6. Procédé de déverrouillage d'un verrou pour un capot (1) d'un inverseur de poussée porté par une nacelle (4), le verrou comprenant : une gâche (16) fixée au capot; et un crochet (12) configuré pour s'engager dans la gâche, le crochet (12) étant relié à une extrémité d'un organe élastique (15) dont l'autre extrémité est fixée à la nacelle (4) pour rappeler de façon élastique (15) le crochet (12) vers un engagement avec la gâche, le verrou comportant en outre: un support (6) fixé à la nacelle (4) et portant un organe de verrouillage/déverrouillage (7,9 ;17,19) interposé entre le crochet et ledit support fixé à la nacelle, ledit organe de verrouillage/déverrouillage étant configuré pour permettre d'une part un déplacement du crochet par rapport au dit support fixé à la nacelle entre une position dite de verrouillage pour laquelle le crochet est engagé dans la gâche et exerce un appui sur celle-ci et une position dite de déverrouillage pour laquelle le crochet est dégagé de la gâche ou simplement au contact de celle-ci, et d'autre part un basculement du crochet pour le dégager de la gâche ou l'engager dans celle-ci,
le procédé **caractérisé en ce que**, partant d'une position de verrouillage du verrou, pour laquelle au moins un crochet (12) est engagé dans au moins une gâche (16) et est appliqué sur celle-ci avec une force dite de verrouillage, le procédé comporte les étapes de : commander un déplacement dudit au moins un crochet (12) selon une direction appropriée pour réduire la force appliquée à ladite au moins une gâche, puis effectuer un basculement dudit au moins un crochet dans un sens libérant ladite au moins une gâche (16).

## Patentansprüche

1. Gondelgitter oder -tür mit einer Verriegelung, die mit mindestens einem Gitter oder einer Tür verbunden ist, für eine Haube (1) einer von der Gondel (4) getragenen Schubumkehrvorrichtung, wobei die Verriegelung Folgendes umfasst: einen Schließbügel (16), der an der Haube befestigt ist; und einen Haken (12), der so eingerichtet ist, dass er in den Schließbügel eingreift, wobei die Verriegelung Folgendes aufweist: eine Halterung (6), die an der Gondel (4) befestigt ist und ein Verriegelungs-/Entriegelungselement (7, 9; 17, 19) trägt, das zwischen dem Haken und der an der Gondel befestigten Halterung eingefügt ist, wobei das Verriegelungs-/Entriegelungselement so eingerichtet ist, dass es einerseits eine Bewegung des Hakens in Bezug auf die an der Gondel befestigten Halterung zwischen einer Verriegelungsposition, in der der Haken in den Schließbügel eingreift und eine Kraft auf ihn ausübt, und einer Entriegelungsposition, in der der Haken vom Schließbügel gelöst ist oder diesen lediglich berührt, und andererseits ein Schwenken des Hakens ermöglicht, um ihn vom Schließbügel zu lösen oder mit diesem in Eingriff zu bringen,
**dadurch gekennzeichnet, dass** der Haken (12) mit einem Ende eines elastischen Elements (15) verbunden ist, dessen anderes Ende an der Gondel (4) befestigt ist, um den Haken (12) elastisch (15) in den Eingriff mit dem Schließbügel zu bringen.

2. Gondelgitter oder -tür nach Anspruch 1, **dadurch gekennzeichnet, dass** das Verriegelungs-/Entriegelungselement (7, 9; 17, 19) schwenkbar auf der an der Gondel befestigten Halterung (6) montiert ist, dass der Haken und das Verriegelungs-/Entriegelungselement so eingerichtet sind, dass sie eine Pleuelstangen-/Kurbelanordnung bilden, und dass das Schwenken des Hakens (12) durch einen Nocken (14) gewährleistet wird, der am Verriegelungs-/Entriegelungselement befestigt ist.

3. Gondelgitter oder -tür nach Anspruch 2, **dadurch gekennzeichnet, dass** das Verriegelungs-/Entriegelungselement ein Zahnrad (11) aufweist, das mit einer Schnecke (7) verbunden ist, die von einem Motor (8) angetrieben wird, der an der an der Gondel befestigten Halterung befestigt ist.

4. Gondelgitter oder -tür nach Anspruch 2, **dadurch gekennzeichnet, dass** das Verriegelungs-/Entriegelungselement mit einem Hydraulikzylinder (17) verbunden ist.

5. Gondelgitter oder -tür nach einem der vorhergehenden Ansprüche, **dadurch gekennzeichnet, dass** die Verriegelung zwei Verriegelungs-/Entriegelungselemente (7, 9; 17, 19), die jeweils mit einem Haken verbunden sind, und ein Betätigungselement (8; 17) umfasst, das den beiden Verriegelungs-/Entriegelungselementen gemeinsam ist

6. Verfahren zum Entriegeln einer Verriegelung für eine Haube (1) einer von einer Gondel (4) getragenen Schubumkehrvorrichtung, wobei die Verriegelung Folgendes umfasst: einen Schließbügel (16), der an der Haube befestigt ist; und einen Haken (12), der so eingerichtet ist, dass er in den Schließbügel eingreift, wobei der Haken (12) mit einem Ende eines elastischen Elements (15) verbunden ist, dessen anderes Ende an der Gondel (4) befestigt ist, um den Haken (12) elastisch (15) in den Eingriff mit dem Schließbügel zu bringen, wobei die Verriegelung ferner Folgendes aufweist: eine Halterung (6), die an der Gondel (4) befestigt ist und ein Verriegelungs-/Entriegelungselement (7, 9; 17, 19) trägt, das zwischen dem Haken und der an der Gondel befestigten Halterung eingefügt ist, wobei das Verriegelungs-/Entriegelungselement so eingerichtet ist, dass es einerseits eine Bewegung des Hakens in Bezug auf die an der Gondel befestigten Halterung zwischen einer Verriegelungsposition, in der der Haken in den Schließbügel eingreift und einen Druck auf ihn ausübt, und einer Entriegelungsposition, in der der Haken vom Schließbügel gelöst ist oder diesen lediglich berührt, und andererseits ein Schwenken des Hakens ermöglicht, um ihn vom Schließbügel zu lösen oder mit diesem in Eingriff zu bringen,
wobei das Verfahren **dadurch gekennzeichnet ist, dass** das Verfahren ausgehend von einer Verriegelungsposition der Verriegelung, in der mindestens ein Haken (12) in mindestens einen Schließbügel (16) eingreift und an diesem mit einer Verriegelungskraft anliegt, die folgenden Schritte umfasst: Steuern einer Bewegung des mindestens einen Hakens (12) entlang einer Richtung, die geeignet ist, um die auf den mindestens einen Schließbügel ausgeübte Kraft zu verringern, um dann ein Schwenken des mindestens einen Hakens in eine Richtung zu bewirken, die den mindestens einen Schließbügel (16) freigibt.

## Claims

1. A cascade- or door-type nacelle including a lock, associated with a least one cascade or one door, for a cowl (1) of a thrust reverser carried by the nacelle (4), the lock comprising: a striker (16) fastened to the cowl; and a hook (12) configured to be engaged into the striker, the lock including: a support (6) fastened to the nacelle (4) and carrying a locking/unlocking member (7,9 ; 17,19) interposed between the hook and said support fastened to the nacelle, said locking/unlocking member being configured to enable on the one hand a displacement of the hook relative to said support fastened to the nacelle between a position called locking position for which the hook is engaged into the striker and exerts a bearing thereon and a position called unlocking position for which the hook is cleared from the striker or simply in contact therewith, and on the other hand a tilting of the hook to clear it from the striker or engage it therein,
**characterized in that** the hook (12) is connected to one end of an elastic member (15) whose other end is fastened to the nacelle (4) to elastically bias (15) the hook (12) into engagement with the striker.

2. The cascade- or door-type nacelle according to claim 1, **characterized in that** the locking/unlocking member (7,9 ; 17,19) is pivotally mounted on said support (6) fastened to the nacelle, **in that** the hook and the locking/unlocking member are configured to form a connecting rod/crank assembly, and **in that** the tilting of the hook (12) is ensured by a cam (14) fastened to the locking/unlocking member.

3. The cascade- or door-type nacelle according to claim 2, **characterized in that** the locking/unlocking member includes a gear wheel (11) associated with a worm screw (7) driven by a motor (8) fastened to said support fastened to the nacelle.

4. The cascade- or door-type nacelle according to claim 2, **characterized in that** the locking/unlocking member is connected to a hydraulic cylinder (17).

5. The cascade- or door-type nacelle according to any one of the preceding claims, **characterized in that** the lock includes two locking/unlocking members (7,9 ; 17,19) each associated with one hook, and an actuation member (8 ; 17) common to both locking/unlocking members.

6. A method for unlocking a lock for a cowl (1) of a thrust reverser carried by a nacelle (4), the lock comprising: a striker (16) fastened to the cowl; and a hook (12) configured to be engaged into the striker, the hook being connected to one end of an elastic member (15) whose other end is fastened to the nacelle (4) to elastically bias (15) the hook (12) into engagement with the striker, the lock further including:
a support (6) fastened to the nacelle (4) and carrying a locking/unlocking member (7,9 ; 17,19) interposed between the hook and said support fastened to the nacelle, said locking/unlocking member being configured to enable on the one hand a displacement of the hook relative to said support fastened to the nacelle between a position called locking position for which the hook is engaged into the striker and exerts a bearing thereon and a position called unlocking position for which the hook is cleared from the striker or simply in contact therewith, and on the other hand a tilting of the hook to clear it from the striker or engage it therein,
the method being **characterized in that**, starting from a locking position of the lock, for which at least one hook (12) is engaged into at least one striker (16) and is pressed thereon with a force called locking force, the method includes the steps of: controlling a displacement of said at least one hook (12) according to a direction adapted to reduce the force applied to said at least one striker, and then performing a tilting of said at least one hook in a direction releasing said at least one striker (16).
